# EUROPEAN PATENT APPLICATION

(11) **EP 2 079 201 A1**
(43) Date of publication of application: **15.07.2009**
(21) Application number: 07831031.5
(22) Date of filing: 01.11.2007
(51) Int. Cl.: H04L 12/56, H04L 9/32, H04L 12/22, H04Q 7/38

(54) **COMMUNICATION METHOD, COMMUNICATION SYSTEM, MOBILE NODE AND COMMUNICATION NODE**

(30) Priority: 02.11.2006 JP 2006299468
(71) Applicant: Panasonic Corporation, Kadoma-shi Osaka 571-8501 (JP)
(72) Inventor: ARAMAKI, Takashi c/o Panasonic Corporation, IPROC, Shiromi, Chuo-ku, Osaka 540-6207 (JP); ASO, Keigo c/o Panasonic Corporation, IPROC, Shiromi, Chuo-ku, Osaka 540-6207 (JP)
(74) Representative: Grünecker, Kinkeldey, Stockmair & Schwanhäusser Anwaltssozietät
(86) International application number: PCT/JP2007/071297
(87) International publication number: WO 2008/053955

(57) **Abstract**

The invention discloses a technique, by which the number of messages can be decreased when RR (Return Routability) procedure is performed to give authentication between a mobile node (MN) and a correspondent node (CN). According to this technique, CN 3 receives a plurality of CoTi messages transmitted from each of a plurality of interfaces of MN 1, generates a signature token for each of a plurality of care-of addresses, and transmits the signature token in each of a plurality of CoT messages to MN. Then, MN generates a common key for a plurality of care-of addresses by using each signature token of said plurality of CoT messages, generates a common authentication code for said plurality of care-of addresses by using said common key, transmits a bulk binding update message containing said plurality of care-of addresses and the common authentication code to CN. CN authenticates the common authentication code for said plurality of care-of addresses in the bulk binding update message. Also, CoTi and CoT are transmitted in a bulk message, and BU messages are transmitted individually to each CoA.

## Description

### TECHNICAL FIELD

The present invention relates to a communication method, according to which a correspondent node authenticates a mobile node, which has a plurality of interfaces and in which a care-of address is assigned to each of said plurality of interfaces. The invention also relates to a communication system, a mobile node and a communication node based on the communication method as described above.

### BACKGROUND ART

According to the standard MIPv6 (the Non-Patent Document 1), an RR (Return Routability) procedure is disclosed as means for authentication, by which a correspondent node (CN) authenticates a mobile node (MN) at route optimization. RR of MIPv6 consists of protection from illegitimate re-direction by a test on HoA and of confirmation of reachability by a test on CoA.

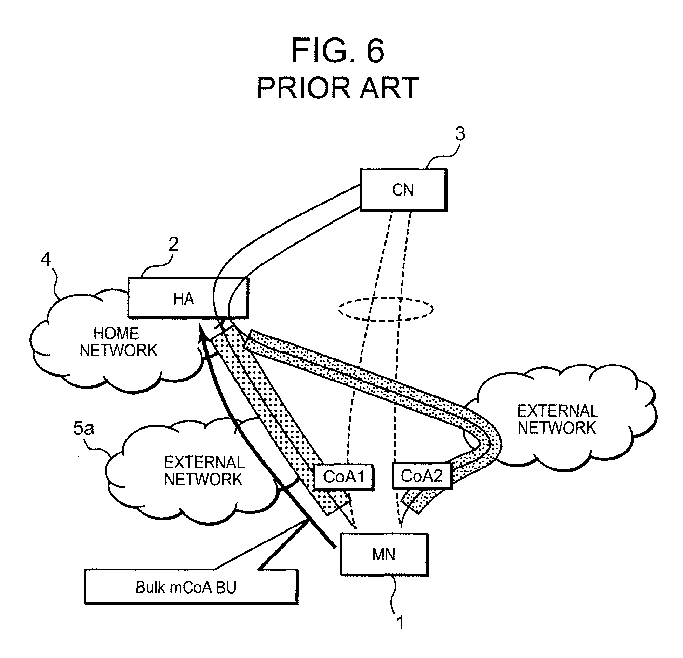

On the other hand, according to Monami6 (Mobile Nodes and Multiple Interfaces in IPv6), various proposals are made for a case where a mobile node (MN) has a plurality of interfaces. Also, MN, using the Mobile IP (Internet Protocol), registers a care-of address (CoA), i.e. an address of a move destination, at a home agent (HA) to control its own home address (HoA), and MN requests to transfer a packet destined to HoA. If MN can register a plurality of CoAs by associating with one HoA at the same time, MN, which has a plurality of interfaces, can instantaneously switch over CoA to be used, depending on the conditions of the interfaces, by registering a CoA assigned to each of the interfaces. Fig. 6 is a schematical drawing to show a bulk BU (binding update) in a conventional type Monami6. The Non-Patent Document 2 as given below describes a method, according to which MN 1 can register a plurality of CoAs (Bulk mCoA BU) to HA 2 by associating the plurality of CoAs with a single HoA as shown in Fig. 6. In Monami6, no description is given on the means for carrying out route optimization (RO).
Non-Patent Document 1: D. Johnson, C. Perkins, and J. Arkko: "Mobility Support in IPv6"; RFC3775; June 2004.
Non-Patent Document 2: R. Wakikawa, T. Ernst, and K. Nagami: "Multiple Care-of Addresses Registration"; draft-ieft-monami6-multiplecoa-00.txt; June 2006.

By the way, when MN registers a plurality of CoAs to HA by bulk BU (binding update) registration in Monami6, it can be regarded that MN collectively gives the binding messages relating to a plurality of CoAs to CN (bulk BU) in the RR procedure, and CN simply combines this in the RR procedure of MIPv6 to authenticate MN. However, in Bulk mCoA BU of Monami6 as shown in Fig. 6, if it is seen from the viewpoint that the security between MN 1 and HA 2 is protected by IPsec, there is no such conception as to carry out authentication on the bulk BU. In contrast, in the RR procedure of MIPv6 with the purpose of authenticating MN 1 by CN 3, it cannot be assumed that the security between MN 1 and CN 3 is protected by IPsec. Accordingly, the contents of the BU messages are different, and it is necessary to have a binding management key (Kbm) or a signature (MAC) for each individual CoA in the BU messages of the RR procedure (to be described later). For this reason, the BU message destined to HA in Monami6 cannot be applied to the RR procedure between MN 1 and CN 3, and it is necessary to individually send the BU message to CN for each of the CoAs in the RR procedure between MN 1 and CN 3.

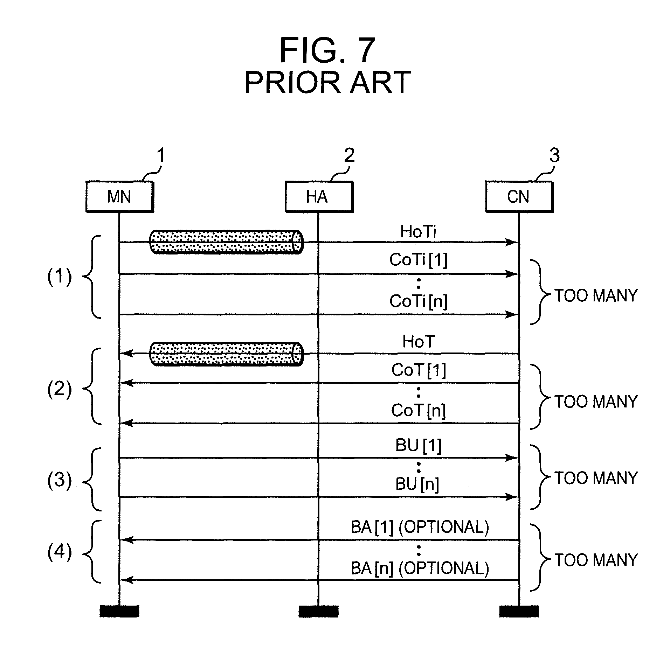

Fig. 7 shows operation in this case, i.e. the problems to be solved by the present invention. Now, referring to Fig. 7, description will be given on the RR procedure of MIPv6. First,
(1) MN 1 generates a cookie for each of HoAs and CoAs. Then, a HoTi (Home-Test-Init) message to CN 3 is encapsulated and addressed to HA 2 and it is transmitted via a home network 4 and via an external network 5a. Then, CoTi[1] - CoTi[n] messages (CoTi: Care-of-Test-Init) destined to CN 3 for each of a plurality (n) of CoA[1] - CoA[n] are individually transmitted directly to CN 3 via the external networks 5a and 5b without passing through HA 2, and cookies for each of HoA and CoA are transmitted to CN 3.
(2) In response to this, CN 3 generates a signature token for each of HoAs and CoA[1] - CoA[n] from the cookies, and transmits HoT (Home-Test) message destined to MN 1 via HA 2. Also, by transmitting CoT[1] - CoT[n] messages (CoT: Care-of-Test) destined directly to MN 1 for CoA[1] - CoA[n], the signature tokens are transmitted.

(3) Next, in response to this, MN 1 generates the binding management keys Kbm[1] - Kbm[n] for each of CoA[1] - CoA[n] from the signature tokens, prepares message authentication codes MAC[1] - MAC[n] (MAC: Message Authentication Code). Kbm[1] - Kbm[n] and MAC[1] - MAC[n] are transmitted by individually transmitting the binding update messages BU[1] - BU[n] destined directly to CN 3 for each of CoA[1] - CoA[n]. Separately from MN 1 but similarly to MN 1, CN 3 generates MAC[1] - MAC[n] and authenticates the BU[1] - BU[n] messages.
(4) As an option, in response to BU[1] - BU[n] messages, CN 3 may transmit binding acknowledgment messages BA[1] - BA[n]. In this respect, in (1) - (3) as given above, problems may arise in that it is necessary to transmit a multiple (3n) of messages because CoTi, CoT and BU messages are to be transmitted to each of a plurality of CoAs.

### DISCLOSURE OF THE INVENTION

To overcome the above problems, it is an object of the present invention to provide a communication method, a communication system, a mobile node and a communication node, by which it is possible to decrease the number of messages when the RR (Return Routability) procedure is performed for the purpose of performing authentication between a mobile node (MN) and a correspondent node (CN).

To attain the above object, the invention provides a communication method where a correspondent node authenticates a mobile node, which has a plurality of interfaces and in which a care-of address is assigned to each of said plurality of interfaces, wherein said method comprises:
a step where said mobile node transmits a first message individually from each of said plurality of interfaces to said correspondent node;
a step where said correspondent node receives a plurality of said first messages transmitted respectively from said plurality of interfaces, generates a signature token for each of said plurality of care-of addresses, and transmits each of said signature tokens to said mobile node in each of a plurality of second messages;
a step where said mobile node generates a common key for said plurality of care-of addresses by using each of the signature tokens in said plurality of second messages, generates a common authentication code to said plurality of care-of addresses by using said common key, and transmits a bulk binding update message containing said plurality of care-of addresses and said common authentication code to said correspondent node; and
a step where said correspondent node authenticates a common authentication code to said plurality of care-of addresses in said bulk binding update message.

Also, to attain the above object, the present invention provides a communication system where a correspondent node authenticates a mobile node, which has a plurality of interfaces and in which a care-of address is assigned to each of said plurality of interfaces, wherein said system comprises:
means, by which said mobile node transmits a first message individually from each of said plurality of interfaces to said correspondent node;
means, by which said correspondent node receives a plurality of said first messages transmitted respectively from said plurality of interfaces, generates a signature token for each of said plurality of care-of addresses, and transmits each of said signature tokens in each of a plurality of second messages to said mobile node;
means, by which said mobile node generates a common key for said plurality of care-of addresses by using each token for signature in said plurality of second messages, generates a common authentication code for said plurality of care-of addresses by using said common key, and transmits a bulk binding update message containing said plurality of care-of addresses and containing said common authentication code to said correspondent node;
means, by which said correspondent node authenticates said common authentication code for said plurality of care-of addresses in said bulk binding update message.

Further, to attain the above object, the present invention provides said mobile node in a communication system where a correspondent node authenticates a mobile node, which has a plurality of interfaces and in which a care-of address is assigned to each of said plurality of interfaces, said mobile node comprising:
means for individually transmitting a first message from each of said plurality of interfaces to said correspondent node; and
means, for, when said correspondent node receives a plurality of said first messages from each of said plurality of interfaces, generates a signature token for each of said plurality of care-of addresses, and transmits said signature token to said mobile node in each of a plurality of second messages, generating a common key to said plurality of care-of addresses by using each of signature tokens in said plurality of care-of addresses, generating a common authentication code for said plurality of care-of addresses by using said common key, and transmitting a bulk binding update message containing said plurality of care-of addresses and said common authentication code to said correspondent node;
and wherein said correspondent node authenticates said common authentication code for said plurality of care-of addresses in said bulk binding update message.

Also, to attain the above object, the present invention provides a correspondent node in a communication system where said correspondent node authenticates a mobile node, which has a plurality of interfaces and in which a care-of address is assigned to each of said plurality of interfaces, said correspondent node comprising:
means for, when said mobile node individually transmits a first message from each of said plurality of interfaces to said correspondent node, receiving a plurality of said first messages transmitted from each of said plurality of interfaces, generating a signature token for each of said plurality of care-of addresses, and transmitting each signature token in each of said plurality of second messages to said mobile node; and
means for, when said mobile node generates a common key for said plurality of care-of addresses by using each of signature tokens in said plurality of second messages, generates a common authentication code for said plurality of care-of addresses by using said common key, and transmits a bulk binding update message containing said plurality of care-of addresses and said common authentication node to said correspondent node, authenticating a common authentication code to said plurality of care-of addresses in said bulk binding update message.

Further, to attain the above object, the present invention provides a communication method where a correspondent node authenticates a mobile node, which has a plurality of interfaces and in which a care-of address is assigned to each of said plurality of interfaces, wherein said method comprises:
a step where said mobile node transmits a first bulk message containing said plurality of care-of addresses from one of said plurality of interfaces to said correspondent node;
a step where said correspondent node receives said first bulk message, generates a signature token for each of said plurality of care-of addresses, and transmits each signature token in a common second bulk message for said plurality of care-of addresses to said mobile node;
a step where said mobile node generates each key for each of said plurality of care-of addresses by using each signature token in said second bulk message, generates each authentication code for each of said plurality of care-of addresses by using said each key, and transmits a plurality of binding update messages containing each of said plurality of care-of addresses and each of said authentication codes;
a step where said correspondent node authenticates each authentication code in said plurality of binding update messages and transmits each binding acknowledgment message to said mobile node;
a step where said mobile node receives each of said binding acknowledgement messages, generates a common key for said plurality of care-of addresses by using each signature token in said plurality of second messages, generates a common authentication code for said plurality of care-of addresses by using said common key, and transmits a bulk acknowledgment message containing said plurality of care-of addresses and said common authentication code to said correspondent node; and
a step where said correspondent node judges whether each of said plurality of care-of addresses in said bulk acknowledgment message is reachable or not.

Also, to attain the above object, the present invention provides a communication system where a correspondent node authenticates a mobile node, which has a plurality of interfaces and in which a care-of address is assigned to each of said plurality of interfaces, wherein said system comprises:
means, by which said mobile node transmits a first bulk message containing said plurality of care-of addresses from one of said plurality of interfaces to said correspondent node;
means, by which said correspondent node receives said first bulk message, generates a signature token for each of said plurality of care-of addresses, and transmits said signature token in a common second bulk message for said plurality of care-of addresses to said mobile node;
means, by which said mobile node generates each key for each of said plurality of care-of addresses by using each signature token in said second bulk message, generates an authentication code to each of said plurality of care-of addresses by using said each key, and transmits a plurality of binding update messages containing each of said plurality of care-of addresses and each of said authentication codes to said correspondent node;
means, by which said correspondent node authenticates each of authentication codes in said plurality of binding update messages, and transmits each binding acknowledgment message to said mobile node;
means, by which said mobile node receives each of said binding acknowledgment messages, generates a common key for said plurality of care-of addresses by using each signature token in said plurality of second messages, generates a common authentication code for said plurality of care-of addresses by using said common key, and transmits a bulk acknowledgement message containing said plurality of care-of addresses and said common authentication code to said correspondent node; and
means, by which said correspondent node judges whether each of said plurality of care-of addresses in said bulk acknowledgment message is reachable or not.

Further, to attain the above object, the present invention provides a mobile node in a communication system where a correspondent node authenticates said mobile node, which has a plurality of interfaces and in which a care-of address is assigned to each of said plurality of interfaces, said mobile node comprising:
means for transmitting a first bulk message containing said plurality of care-of addresses from one of said plurality of interfaces to said correspondent node;
means for, when said correspondent node receives said first bulk message, generates each signature token for each of said plurality of care-of addresses and transmits said signature token to said plurality of care-of addresses in a common second bulk message to said correspondent node, generating each key for each of said plurality of care-of addresses by using each signature token in said second bulk message, generating an authentication code for each of said plurality of care-of addresses by using said each key, and transmitting a plurality of addresses by using each key, and transmits a plurality of binding update messages containing each of said plurality of care-of addresses and each of said authentication codes to said correspondent node; and
means for, when said correspondent node authenticates each authentication code in said plurality of binding update messages, and transmits each binding acknowledgment message to said mobile node, receiving said binding acknowledgment messages, generating a common key for said plurality of care-of addresses by using each signature token in said plurality of second messages, generating a common authentication code for said plurality of care-of addresses by using said common key, and transmitting a bulk acknowledgment message containing said plurality of care-of addresses and said common authentication code to said correspondent node;
and wherein said correspondent node judges whether each of said plurality of care-of addresses in said bulk acknowledgment message is reachable or not.

Also, to attain the above object, the present invention provides a correspondent node in a communication system where said correspondent node authenticates a mobile node, which has a plurality of interfaces and in which a care-of address is assigned to each of said plurality of interfaces, said correspondent node comprising:
means for, when said mobile node transmits a first bulk message containing said plurality of care-of addresses from one of said plurality of interfaces, receiving said first bulk message, generating each signature token for each of said plurality of care-of addresses and transmitting each signature token to said plurality of care-of addresses in a common second bulk message to said mobile node;
means for, when said mobile node generates each key for each of said plurality of care-of addresses by using each signature token in said second bulk message, generates each authentication code for each of said plurality of care-of addresses by using said each key, and transmits a plurality of binding update messages containing each of said plurality of care-of addresses and each of said authentication codes to said correspondent node, authenticating each authentication code in said plurality of binding update messages and transmitting each binding acknowledgment message to said mobile node; and
means for, when said mobile node receives each of said binding acknowledgement messages, generates a common key for said plurality of care-of addresses by using each signature token in said plurality of second messages, generates a common authentication code for said plurality of care-of addresses by using said common key, and transmits a bulk acknowledgment message containing said plurality of care-of addresses and said common authentication code to said correspondent node, judging whether each of said plurality of care-of addresses in said bulk acknowledgment message is reachable or not.

By the arrangement as described above, it is possible to decrease the number of messages when the RR (Return Routability) procedure is performed for authentication between a mobile node (MN) and a correspondent node (CN).

According to the present invention, it is possible to decrease the number of messages when the RR (Return Routability) procedure is performed for authentication between a mobile node (MN) and a correspondent node (CN).

### BRIEF DESCRIPTION OF THE DRAWINGS

Fig. 1 is a schematical drawing to show an arrangement and a message in a first embodiment of a communication system according to the present invention;
Fig. 2 is a schematical drawing to show a communication sequence of the first embodiment;
Fig. 3 is a schematical drawing to show an arrangement and a message in a second embodiment of a communication system according to the present invention;
Fig. 4 is a schematical drawing to show a communication sequence of the second embodiment;
Fig. 5 is a table for evaluating and studying the first and the second embodiments;
Fig. 6 is a schematical drawing to show as to how a bulk BU is transmitted in a conventional procedure of Monami6; and
Fig. 7 is a schematical drawing to explain problems to be solved by the invention.

### BEST MODE FOR CARRYING OUT THE INVENTION

Description will be give below on embodiments of the present invention by referring to the attached drawings.

### [First Embodiment]

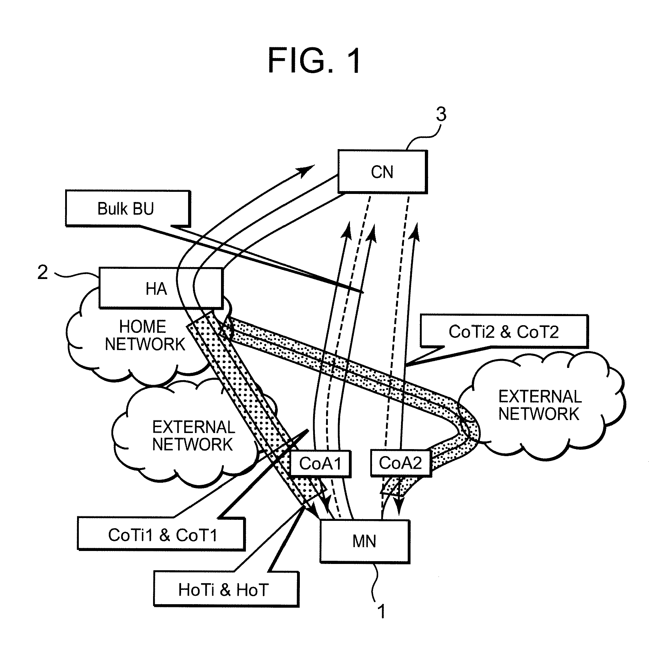

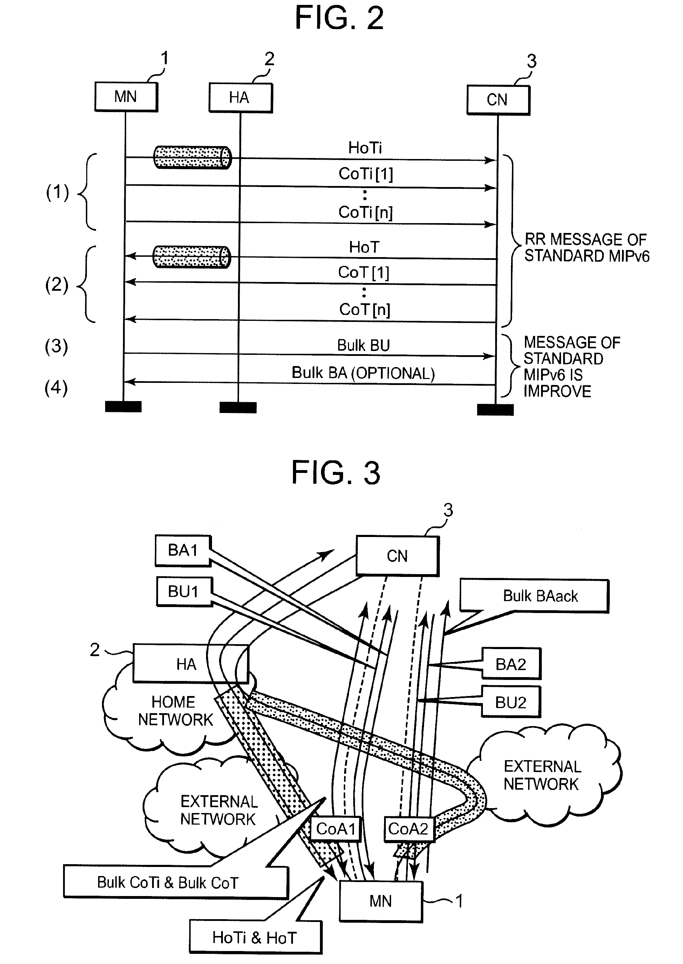

Fig. 1 is a schematical drawing to show an arrangement and messages in a first embodiment of a communication system according to the present invention, and Fig. 2 shows a communication sequence of the first embodiment. In the first embodiment, a message of each of CoTi (Care-of-Test-Init) and CoT (Care-of-Test) is transmitted to each of a plurality of CoAs (care-of addresses), and a bulk BU (bulk binding update) message is collectively transmitted (bulk BU) to said plurality of CoAs. In Fig. 1, a mobile node (MN) 1 has two interfaces and there are two CoAs. In the figure, only two each of CoTi messages and CoT messages (i.e. CoTi 1 and CoTi 2, and CoT 1 and CoT 2) are shown.

### (1) CoTi(HoTi)

First, MN 1 generates a cookie K0 (Home Init Cookie) for home address and each of Care-of Init Cookies K1[1] - K[n] for each of care-of addresses CoA[1] - CoA[n]. Then, MN 1 transmits a HoTi message containing the cookie K0 to CN 3 via HA (home address) 2 and transmits individually and directly CoTi[1] - CoTi[n] messages each containing the cookies K1[1] - K1[n] respectively. As for the address of the message from MN 1 to HA 2, a packet destined to CN is encapsulated in a packet destined to HA. A source address of each of the packets of CoTi[1] - CoTi[n] messages is assigned to CoA[1] - CoA[n] respectively.

### (2) CoT(HoT)

CN 3 holds a secret key Kcn and a nonce table in advance. When CoTi[1] - CoTi[n] messages are received, a signature token T0 for the home address HoA and signature tokens T1[1] - T1[n], each for care-of addresses CoA[1] -CoA[n] respectively, are generated. Nj of each of CoA(1)-CoA[n] may be in common or may be different from each other.
T0 : HMC_SHA1(Kcn, (HoA, Ni, 0))
T1[1]: HMAC_SHA1 (Kcn, (CoA[1], Nj, 1))
T1[2]: HMAC_SHA1 (Kcn, (CoA[2], Nj, 1))
· · · · ·
T1[n]: HMAC_SHA1 (Kcn, (CoA[n], Nj, 1))

Then, CN 3 transmits a HoT message, which contains a cookie K0, a signature token T0, a nonce table index i, etc. to MN 1 via HA 2, and also directly and individually transmits CoT[1] - CoT[n] containing cookies K1[1] - K1[n], signature tokens T1[1] - T1[n], a nonce table index j, etc.
HoT : (K0, T0, l · · ·)
CoT[1]: (K1[1], T1[1], j · · ·)
CoT[2]: (K1[2], T1[2], j · · ·)
· · · · ·
CoT[n]: (K1[n], T1[n], j · · ·)

### <Problems>

The procedures for each individual CoA in (1) and (2) above are described in the RR procedure of the standard MIPv6 (RFC3775) and are already known. In the procedure to transmit the BU messages, binding management keys Kbm[1], Kbm[2] - Kbm[n] are generated from hash values of the tokens in order to transmit individual BU messages for CoA[1] - CoA[n] respectively.
Kbm[1]: SHA1 (T0, T1[1])
Kbm[2]: SHA1 (T0, T1 [2])
· · · · ·
Kbm[n]: SHA1 (T0, T1[n])
Also, MAC[1], MAC[2] - MAC[n], which are signatures, are generated as described below from hash values of Kbm, CoA, CN address and BU.
MAC[1]: HMAC_SHA1 (Kbm, (CoA[1], CN address, BU))
MAC[2]: HMAC_SHA1 (Kbm, (CoA[2], CN address, BU))
· · · · ·
MAC[n]: HMAC_SHA1 (Kbm, (CoA[n], CN address, BU))

Then, MN 1 generates messages with the contents as given below as individual BU messages BU[1], BU[2] - BU[n] to CN 3 and transmits them.
BU[1](HoA, CoA[1], i, j, seq#, MAC[1])
BU[2](HoA, CoA[2], i, j, seq#, MAC[2])
· · · · ·
BU[n](HoA, CoA[n], i, j, seq#, MAC[n])

Separately from MN 1 but similarly to MN 1, CN 3 generates Kbm[1], Kbm[2] - Kbm[n] respectively. Then, MAC[1], MAC[2] - MAC[n] are generated respectively from Kbm[1], Kbm[2] - Kbm[n]. These are compared with MAC[1], MAC[2] - MAC[n] in the BU messages BU[1], BU[2] - BU[n]. When concurrence is found, it is regarded as "authentication OK", and a binding acknowledgment (BA) message is sent back individually to MN 1. This means that as many BU messages as the number of CoAs are required. Also, there is no conception of authentication on BU in Monami6.

### <Solution of the first embodiment>

(3) In contrast to this, in the first embodiment, for the purpose of generating the bulk BU messages by reducing the number of the BU messages, MN 1 first generates a common binding management key Kbm(common) for CoA[1] - CoA[n] from hash value of each of the tokens as given below.
Kbm(common): SHA1(T0, T1[1], T1[2] - T1[n])
Next, a common MAC(common) is generated CoA[1] - CoA[n] as given below from Kbm(common) and from each of CoA[1] - CoA[n] as an example.
MAC(common): HMAC_SHA1 (Kbm(common), (CoA[1], CoA[2] - CoA[n], CN address, BU))
Then, MN 1 generates a common message for CoA[1] - CoA[n] with the contents as given below as a bulk BU message to CN 3, and transmits it.
Bulk BU (HoA, CoA[1], CoA[2] - CoA[n], i, j, seq#, MAC)

(4) Separately from MN1 but similarly to MN 1, CN 3 generates Kbm(common). Then, MAC(common) is generated from Kbm(common). These are compared with MAC(common) in the bulk BU message. When concurrence is found, it is regarded as "authentication OK", and a binding acknowledgment (BA) message is sent back as a bulk message to MN 1. In this case, the interface, via which MN 1 transmits the bulk BU message, and the interface, via which MN 1 receives the bulk BA message, are arbitrary and may be the same or different.

Next, description will be given on the confirmation by CN 3 that the packets can reach each of CoA[1], CoA[2] - CoA[n] in the first embodiment.
In (1), MN 1 generates Care-of Init Cookies K1[1] - K1[n], being unique to each of CoA[1] - CoA[n], and individually transmits CoTi[1] - CoTi[n] messages, each containing the cookies K1[1] - K1[n] respectively, to CN 3.
In (2), upon receipt of the CoTi[1] - CoTi[n] messages, CN 3 generates signature tokens T1[1] - T1[n], which are unique to each of CoA[1] - CoA[n] respectively. Then, CoT[1] - CoT[n] containing the signature tokens T1[1] - T1[n] respectively are transmitted individually to MN 1.
In (3), when CoT[1] - CoT[n] messages are received, MN 1 generates a common binding management key Kbm(common) for CoA[1] - CoA[n] from the signature tokens T1[1] - T1[n]. Based on this Kbm(common) and all of CoA[1] - CoA[n], a common MAC(common) for CoA[1] - CoA[n] is generated, and a bulk BU message containing the common MAC(common) and all of CoA[1], CoA[2] - CoA[n] is transmitted.

Therefore, even when MN 1 transmits the bulk BU message to CN 3, CN 3 can recognize that each of CoA[1], CoA[2] - CoA[n] is reachable. When it is not an issue that all CoAs are reachable or not, not all of the CoAs, but one or more representative CoAs may be used when the common MAC(common) is generated. An example is given below (where the representative CoAs are CoA[5], CoA[2] and CoA[7]):
MAC:HMAC_SHA1 (Kbm, (CoA[5], CN address, BU)
MAC:HMAC_SHA1 (Kbm, (CoA[2], CoA[7],CN address, BU)

### [Second Embodiment]

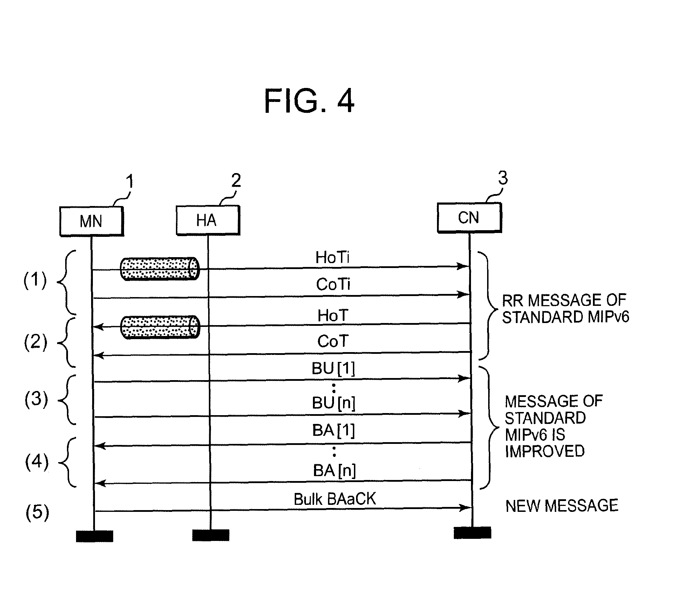

Next, referring to Fig. 3 and Fig. 4, description will be given on the second embodiment of the invention. Fig. 3 is a schematical drawing to show an arrangement and messages in the second embodiment of a communication system according to the invention, and Fig. 4 is a drawing to show a communication sequence in the second embodiment. In the second embodiment, CoTi and CoT are transmitted as bulk messages, and BU messages are individually transmitted to each CoAs.

### (1) CoTi(HoTi)

First, MN 1 generates cookies K1[1] - K1[n] (Care-of Init Cookies) for each cookie K0 for the home address (Home Init Cookie) and each of the cookies K1[1] - K1[n] for the care-of addresses CoA[1] - CoA[n]. Then, MN 1 transmits HoTi messages containing the cookie K0 to CN 3 via HA 2 and directly transmits bulk CoTi messages containing the cookies K1[1] - K1[n] and CoA[1] - CoA[n]. The source address of the packet of the bulk CoTi message is the address of each of the representative CoAs in CoA[1] - CoA[n].

### (2) CoT(Hot)

CN 3 holds a secret key Kcn and a nonce table in advance. Upon receipt of the bulk CoTi message, CN 3 generates a signature token T0 for the home address HoA and the signature tokens T1[1] - T1[n] for each of the care-of addresses CoA[1] - CoA[n] as given below. Nj of CoA[1] - CoA[n] may be used in common or may be different.
T0 : HMAC_SHA1 (Kcn, (HoA, Ni, 0)
T1[1]: HMAC_SHA1 (Kcn, (CoA[1], Nj, 0)
T1[2] : HMAC_SHA1 (Kcn, (CoA[2], Nj, 0)
· · · · ·
T1[n]: HMAC_SHA1 (Kcn, (CoA[n], Nj, 0)

CN 3 transmits a HoT message containing a cookie K0, a signature token T0, and a nonce table index i to MN 1 via HA 2 and also transmits a bulk CoT message containing cookies K1[1] - K1 [n], signature tokens T1[1] - T1[n] and a nonce table index j.
HoT : (K0, T0, · · ·)
CoT: (K1[1], K1[2] - K1[n], T1[2] - T1[n], j · · ·)
In this case, the interface, via which MN 1 transmits the bulk CoTi message, and the interface, via which MN 1 receives the bulk CoT messages, are arbitrary, and may be the same or different.

### (3) MN 1 generates binding management keys Kbm[1],

Kbm[2] - Kbm[n] from hash values of the tokens respectively.
Kbm[1]: SHA1 (T0, T1[1])
Kbm[2]: SHA1 (T0, T1[2])
· · · · ·
Kbm[n]: SHA1 (T0, T1[n])
Next, MAC[1], MAC[2] - MAC[n] for signatures are generated from Kbm[1], Kbm[2] - Kbm[n], CoA[1], CoA[2] - CoA[n], CN address and BU from hash values as given below:
MAC[1]: HMAC_SHA1(Kbm, (CoA[1], CN address, BU)
MAC[2]: HMAC_SHA1(Kbm, (CoA[2], CN address, BU)
· · · · ·
MAC[n]: HMAC_SHA1(Kbm, (CoA[n], CN address, BU)

Then, MN 1 generates messages with the following contents as individual BU messages BU[1], BU[2] - BU[n], and transmits them to CN 3.
BU[1](HoA, CoA[1], i, j, seq#, MAC[1])
BU[2](HoA, CoA[2], i, j, seq#, MAC[2])
· · · · ·
BU[n](HoA, CoA[n], i, j, seq#, MAC[n])

(4) Separately from MN1 but similarly to MN 1, CN 3 generates Kbm[1], Kbm[2] - Kbm[n] respectively. Then, from Kbm[1], Kbm[2] - Kbm[n], etc., MAC[1], MAC[2] - MAC[n] are generated respectively. These are compared with MAC[1], MAC[2] - MAC[n] in individual BU messages. When concurrence is found, it is regarded as "authentication OK", and individual binding acknowledgment (BA) messages are sent back to MN 1.

(5) Upon receipt of the individual BU messages, MN 1 generates a common reachable check key Krc(common) to CoA[1], CoA[2] - CoA[n] respectively, and transmits a bulk BAack message containing Krc(common).
Krc(common):SHA1(T0, T1[1], T1[2] - T1[n])
In this case, Krc(common) is the same as the common binding management key Kbm(common), which is generated from hash values of all tokens and is common to all of CoA[1] - CoA[n]. In this respect, in the second embodiment also, CN 3 can recognize that the packets are reachable to CoA[1], CoA[2] - CoA[n] even when the bulk CoTi message and the bulk COT message are transmitted.

### <The study of the first and the second embodiments>

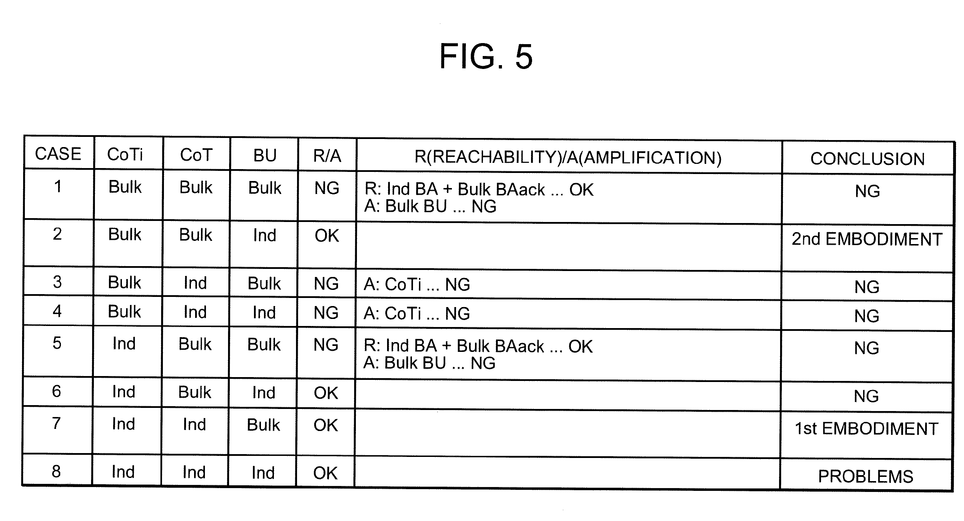

Fig. 5 is a table to show a combination of CoTi, CoT and BU messages on one side and Ind (Individual) and Bulk on the other side. First, the study is made on "reachability" and "amplification". Here, the term "reachability" means that the reachability of the packet to the interface of each of CoAs can be confirmed. The term "amplification" means that there are more messages of responses (amplified) compared with the messages such as inquiries. It is desirable that these are not amplified for the purpose of inducing congestion.
- Case 1 (CoTi=Bulk, CoT=Bulk, BU=Bulk) Because the reachability to each of the interfaces of MN from CN is not confirmed, this does not satisfy the reachability. By using individual BA and bulk BAack messages in addition to these bulk messages, the reachability can be satisfied. (The reachability can also be satisfied by using individual BAack instead of the bulk BAack, but the number of messages will be too many.). However, it is NG because the bulk BU is amplified as individual BA.
- Case 2 (CoTi=Bulk, CoT=Bulk, BU=Ind: the second embodiment) Because individual BA and bulk BAack satisfy the reachability, it is OK.
- Case 3 (CoTi=Bulk, CoT=Ind, BU=Bulk) Because many CoTs are generated (i.e. amplified) by a single CoTi, it is NG.
- Case 4 (CoTi=Bulk, CoT=Ind, BU=Ind) Because many CoTs are generated (i.e. amplified) by a single CoTi, it is NG.
- Case 5 (CoTi=Ind, CoT=Bulk, BU=Bulk) Because the reachability of each of the interfaces of MN from CN is not confirmed, the reachability is not satisfied as it is. By using the individual BA and the bulk BAack messages in addition to these bulk messages, the reachability can be satisfied. (The reachability can also be satisfied by using individual BAack instead of the bulk BAack, but the number of messages will be too many.) However, it is NG because the bulk BU message is amplified as individual BA message.
- Case 6 (CoTi=Ind, CoT=Bulk, BU=Ind) Because the reachability is satisfied by the individual BA and the bulk BAack, it is OK.
- Case 7 (CoTi=Ind, CoT=Ind, BU=Bulk: the first embodiment) Because the reachability is safely checked by the individual CoT and the bulk BU messages, it is OK.
- Case 8 (CoTi=Ind, CoT=Ind, BU=Ind; Fig. 6, Problems) It is OK.

Next, the study is made on the number of messages (and the number of round trips of messages) of the Cases 2, 6, 7 and 8 where it is OK. In the following, the symbol "n" represents the number of CoAs.
- Case 8:
   nCoTi+nCoT+nBU=3n messages, 1.5 round trips
- Case 2:
   1CoTi+1CoT+nBU+nBA+1BAack=2n+3 messages, 2.5 round trips
- Case 6:
   nCoTi+1CoT+nBU+nBA+1BAack=3n+2 messages, 2.5 round trips
- Case 7:
   nCoTi+nCoT+1BU=2n+1 messages, 1.5 round trips
As described above, the number of messages in Case 6 is more than the number of messages in Case 8 (Fig. 6, Problems), and this is not very satisfactory as a solution. When the number of messages in Case 7 (the first embodiment) is n > 2, this is less than the number of messages in Case 8 (Fig. 6, Problems), and this can be the best solution. In Case 2 (the second embodiment), the number of round trips is more than that of Case 8 (Fig. 6, Problems). In case n > 4, the number of messages is decreased, and it is improved.

### INDUSTRIAL APPLICABILITY

The present invention provides such effects that the number of messages can be decreased when the RR (Return Routability) procedure is performed for authentication between a mobile node and a correspondent node, and the invention can be applied on the case such as Monami6.

## Claims

1. A communication method where a correspondent node authenticates a mobile node, which has a plurality of interfaces and in which a care-of address is assigned to each of said plurality of interfaces, wherein said method comprises:
a step where said mobile node transmits a first message individually from each of said plurality of interfaces to said correspondent node;
a step where said correspondent node receives a plurality of said first messages transmitted respectively from said plurality of interfaces, generates a signature token for each of said plurality of care-of addresses, and transmits each of said signature tokens to said mobile node in each of a plurality of second messages;
a step where said mobile node generates a common key for said plurality of care-of addresses by using each of the signature tokens in said plurality of second messages, generates a common authentication code for said plurality of care-of addresses by using said common key, and transmits a bulk binding update message containing said plurality of care-of addresses and said common authentication code to said correspondent node; and
a step where said correspondent node authenticates said common authentication code for said plurality of care-of addresses in said bulk binding update message.

2. A communication system where a correspondent node authenticates a mobile node, which has a plurality of interfaces and in which a care-of address is assigned to each of said plurality of interfaces, wherein said system comprises:
means, by which said mobile node transmits a first message individually from each of said plurality of interfaces to said correspondent node;
means, by which said correspondent node receives a plurality of said first messages transmitted respectively from said plurality of interfaces, generates a signature token for each of said plurality of care-of addresses, and transmits each of said signature tokens in each of a plurality of second messages to said mobile node;
means, by which said mobile node generates a common key for said plurality of care-of addresses by using each token for signature in said plurality of second messages, generates a common authentication code for said plurality of care-of addresses by using said common key, and transmits a bulk binding update message containing said plurality of care-of addresses and containing said common authentication code to said corresponding node;
means, by which said correspondent node authenticates said common authentication code for said plurality of care-of addresses in said bulk binding update message.

3. A mobile node in a communication system where a correspondent node authenticates said mobile node, which has a plurality of interfaces and in which a care-of address is assigned to each of said plurality of interfaces, said mobile node comprising:
means for individually transmitting a first message from each of said plurality of interfaces to said correspondent node; and
means for, when said correspondent node receives a plurality of said first messages from each of said plurality of interfaces, generates a signature token for each of said plurality of care-of addresses, and transmits said signature token to said mobile node in each of a plurality of second messages, generating a common key to said plurality of care-of addresses by using each of signature tokens in said plurality of care-of addresses, generating a common authentication code for said plurality of care-of addresses by using said common key, and transmitting a bulk binding update message containing said plurality of care-of addresses and said common authentication code to said correspondent node;
and wherein said correspondent node authenticates said common authentication code for said plurality of care-of addresses in said bulk binding update message.

4. A correspondent node in a communication system where said correspondent node authenticates a mobile node, which has a plurality of interfaces and in which a care-of address is assigned to each of said plurality of interfaces, said correspondent node comprising:
means for, when said mobile node individually transmits a first message from each of said plurality of interfaces to said correspondent node, receiving a plurality of said first messages transmitted from each of said plurality of interfaces, generating a signature token for each of said plurality of care-of addresses, and transmitting each signature token in each of said plurality of second messages to said mobile node; and
means for, when said mobile node generates a common key for said plurality of care-of addresses by using each of signature tokens in said plurality of second messages, generates a common authentication code for said plurality of care-of addresses by using said common key, and transmits a bulk binding update message containing said plurality of care-of addresses and said common authentication node to said correspondent node, authenticating said common authentication code to said plurality of care-of addresses in said bulk binding update message.

5. A communication method where a correspondent node authenticates a mobile node, which has a plurality of interfaces and in which a care-of address is assigned to each of said plurality of interfaces, wherein said method comprises:
a step where said mobile node transmits a first bulk message containing said plurality of care-of addresses from one of said plurality of interfaces to said correspondent node;
a step where said correspondent node receives said first bulk message, generates a signature token for each of said plurality of care-of addresses, and transmits each signature token in a common second bulk message for said plurality of care-of addresses to said mobile node;
a step where said mobile node generates each key for each of said plurality of care-of addresses by using each signature token in said second bulk message, generates each authentication code for each of said plurality of care-of addresses by using said each key, and transmits a plurality of binding update messages containing each of said plurality of care-of addresses and each of said authentication codes;
a step where said correspondent node authenticates each authentication code in said plurality of binding update messages and transmits each binding acknowledgment message to said mobile node;
a step where said mobile node receives each of said binding acknowledgement messages, generates a common key for said plurality of care-of addresses by using each signature token in said plurality of second messages, generates a common authentication code for said plurality of care-of addresses by using said common key, and transmits a bulk acknowledgment message containing said plurality of care-of addresses and said common authentication code to said correspondent node; and
a step where said correspondent node judges whether each of said plurality of care-of addresses in said bulk acknowledgment message is reachable or not.

6. A communication system where a correspondent node authenticates a mobile node, which has a plurality of interfaces and in which a care-of address is assigned to each of said plurality of interfaces, wherein said system comprises:
means, by which said mobile node transmits a first bulk message containing said plurality of care-of addresses from one of said plurality of interfaces to said correspondent node;
means, by which said correspondent node receives said first bulk message, generates a signature token for each of said plurality of care-of addresses, and transmits said signature token in a common second bulk message for said plurality of care-of addresses to said mobile node;
means, by which said mobile node generates each key for each of said plurality of care-of addresses by using each signature token in said second bulk message, generates an authentication code for each of said plurality of care-of addresses by using said each key, and transmits a plurality of binding update messages containing each of said plurality of care-of addresses and each of said authentication codes to said correspondent node;
means, by which said correspondent node authenticates each of authentication codes in said plurality of binding update messages, and transmits each binding acknowledgment message to said mobile node;
means, by which said mobile node receives each of said binding acknowledgment messages, generates a common key for said plurality of care-of addresses by using each signature token in said plurality of second messages, generates a common authentication code for said plurality of care-of addresses by using said common key, and transmits a bulk acknowledgement message containing said plurality of care-of addresses and said common authentication code to said correspondent node; and
means, by which said correspondent node judges whether each of said plurality of care-of addresses in said bulk acknowledgment message is reachable or not.

7. A mobile node in a communication system where a correspondent node authenticates said mobile node, which has a plurality of interfaces and in which a care-of address is assigned to each of said plurality of interfaces, said mobile node comprising:
means for transmitting a first bulk message containing said plurality of care-of addresses from one of said plurality of interfaces to said correspondent node;
means for, when said correspondent node receives said first bulk message, generates each signature token for each of said plurality of care-of addresses and transmits said signature token to said plurality of care-of addresses in a common second bulk message to said correspondent node, generating each key for each of said plurality of care-of addresses by using each signature token in said second bulk message, generating an authentication code for each of said plurality of care-of addresses by using said each key, and transmitting a plurality of binding update messages containing each of said plurality of care-of addresses and each of said authentication codes to said correspondent node; and
means for, when said correspondent node authenticates each authentication code in said plurality of binding update messages, and transmits each binding acknowledgment message to said mobile node, receiving said binding acknowledgment messages, generating a common key for said plurality of care-of addresses by using each signature token in said plurality of second messages, generating a common authentication code for said plurality of care-of addresses by using said common key, and transmitting a bulk acknowledgment message containing said plurality of care-of addresses and said common authentication code to said correspondent node;
and wherein said correspondent node judges whether each of said plurality of care-of addresses in said bulk acknowledgment message is reachable or not.

8. A correspondent node in a communication system where said correspondent node authenticates a mobile node, which has a plurality of interfaces and in which a care-of address is assigned to each of said plurality of interfaces, said correspondent node comprising:
means for, when said mobile node transmits a first bulk message containing said plurality of care-of addresses from one of said plurality of interfaces, receiving said first bulk message, generating each signature token for each of said plurality of care-of addresses and transmitting each signature token to said plurality of care-of addresses in a common second bulk message to said mobile node;
means for, when said mobile node generates each key for each of said plurality of care-of addresses by using each signature token in said second bulk message, generates each authentication code for each of said plurality of care-of addresses by using said each key, and transmits a plurality of binding update messages containing each of said plurality of care-of addresses and each of said authentication codes to said correspondent node, authenticating each authentication code in said plurality of binding update messages and transmitting each binding acknowledgment message to said mobile node; and
means for, when said mobile node receives each of said binding acknowledgement messages, generates a common key for said plurality of care-of addresses by using each signature token in said plurality of second messages, generates a common authentication code for said plurality of care-of addresses by using said common key, and transmits a bulk acknowledgment message containing said plurality of care-of addresses and said common authentication code to said correspondent node, judging whether each of said plurality of care-of addresses in said bulk acknowledgment message is reachable or not.
